# EUROPEAN PATENT SPECIFICATION

(11) **EP 3 438 039 B1**
(45) Date of publication and mention of the grant of the patent: **17.04.2024**
(21) Application number: 18185405.0
(22) Date of filing: 25.07.2018
(51) Int. Cl.: B66F 9/075, B62D 5/00

(54) **SELF-PROPELLED VEHICLE EQUIPPED WITH A LIFTING UNIT**
SELBSTFAHRENDES FAHRZEUG MIT EINER HUBEINHEIT
VÉHICULE AUTOMOTEUR ÉQUIPÉ D'UNE UNITÉ DE LEVAGE

(30) Priority: 04.08.2017 IT 201700090841
(43) Date of publication of application: 06.02.2019
(73) Proprietor: OGNIBENE POWER S.P.A., 42124 Reggio Emilia (IT)
(72) Inventor: OGNIBENE, Claudio, 42121 REGGIO EMILIA (IT)
(74) Representative: Corradini, Corrado

(56) References cited:
- EP-A1- 2 896 547
- EP-A1- 3 015 415
- EP-A2- 2 570 328
- CN-A- 106 744 554
- DE-A1-102011 087 669
- DE-U1-202013 003 782
- US-A1- 2012 081 234
- US-A1- 2016 179 128

## Description

### TECHNICAL FIELD

The present invention concerns a self-propelled vehicle equipped with a lifting unit, in particular a self-propelled vehicle equipped with a system for warning the user that the limit steering angle beyond which the vehicle risks toppling over has been reached.

### PRIOR ART

Self-propelled vehicles are known that are equipped with a lifting unit for transporting and positioning a load, like for example containers, pallets or cohesion-less material.

In particular, telescopic lifters are known, which generally have one or two pairs of steering wheels articulated to a main frame and a telescopic arm articulated at an end thereof to the main frame and constituting the lifting unit.

A known problem of these vehicles is the poor lateral stability of the vehicle in movement while it transports a load, since such a load generates an unbalancing moment on the main frame that, in combination with the centripetal force that acts on the assembly formed by the vehicle and by the load when the vehicle is cornering, can cause the vehicle to topple over on one side.

Systems are known that, through the analysis of some parameters indicative of the stability of the vehicle, inform the user that a condition of possible instability has been reached through visual or acoustic signalling so that the user can correct the manoeuvre that is being carried out and bring the vehicle back into a condition away from that of instability.

However, such signals can go unnoticed, for example because the user is not looking in the direction of the light emitter, or because as a result of strong lighting of the outdoor environment the signal is not very clear, or furthermore because it cannot be heard due to loud external noises and/or hearing-protection devices worn by the user.

Document EP3015415 describes a self-propelled vehicles equipped with a lifting unit and comprising an electronic control unit configured to measure the value of the steering angle and to emit a haptic signal on the steering wheel when the steering angle reaches a fixed pre-set value at which the instantaneous centre of rotation of the vehicle is between a pair of non-steering wheels. This document discloses the preamble of claim 1.

A drawback of said solution is that the fixed pre-set value must be sufficiently conservative in all working conditions, thus resulting in a too conservative value when the working conditions are light, and therefore limiting in an excessive way the capabilities of the vehicle when the working conditions are light with respect to hard working conditions.

A purpose of the present invention is to overcome the aforementioned constraints of the prior art in a simple, rational and low-cost solution.

Such a purpose is accomplished by the characteristics of the invention given in the independent claim. The dependent claims outline preferred and/or particularly advantageous aspects of the invention.

### SUMMARY OF THE INVENTION

The invention, particularly, provides a self-propelled vehicle comprising: a main frame, two steering wheels articulated to the main frame, a lifting unit connected to the main frame and adapted to lift a load, a steering system adapted to control the steering wheels and equipped with a steering member, and a control unit communicating with a detection sensor for detecting a steering angle of the steering wheels and configured for generating on the steering member a haptic signal perceptible by a user of the vehicle, said self-propelled vehicle having a control unit that communicates with a measuring sensor adapted to measure the value of a parameter of the vehicle that influences the stability of the vehicle itself, said measuring sensor being one from:
- an inertial platform, adapted to calculate the accelerations acting on the vehicle and the inclination of the terrain on which the vehicle moves,
- an accelerometer configured to measure the accelerations of the vehicle along a plane perpendicular to a longitudinal axis of the vehicle itself,
- a speedometer of the vehicle,
- a sensor adapted to measure the weight of the load L,
- a sensor apparatus adapted to determine the relative position of the load (L) with respect to the main frame, said control unit being configured to:
- calculate an alert value of the steering angle of the steering wheels based on the value measured by the measuring sensor, and- generating the haptic signal on the steering member, when the value of the steering angle detected by the detection sensor exceeds the alert value.

Thanks to such a solution it is possible to warn the operator that a possible condition of lateral instability of the vehicle that could lead to the vehicle toppling over has been reached or is approaching with greater certainty that the warning is received with respect to visual or acoustic signals.

According to an aspect of the invention, the haptic signal can be a vibration.

In this way, the operator is informed that a possible condition of lateral instability of the vehicle has been reached in an effective manner and without generating a hindrance to the driving of the vehicle.

Another aspect of the invention provides that, alternatively or in addition, the haptic signal can be an increase, with respect to when the steering angle measured is less than the alert value, in the resistance that opposes a movement of the steering member in the direction that allows the steering angle of the steering wheels to be increased.

In this way, also in the presence of rough terrain that could generate vibrations that could be mistaken for a vibrating haptic signal of the steering member, it is possible to effectively warn the operator that a possible condition of lateral instability of the vehicle has been reached.

Preferably, the control unit can be configured to calculate, based on the value measured by the measuring sensor, a maximum value of the steering angle, greater than the alert value, and to generate on the steering member, when the value of the steering angle detected exceeds the maximum value, a further haptic signal perceptible by the user of the vehicle.

Thanks to such a solution it is possible to inform the operator that a subsequent and more dangerous threshold with respect to the alert value of the lateral instability of the vehicle has been reached, at which he/she must take immediate action to avoid the vehicle toppling over.

According to another aspect of the invention, the further haptic signal can be an active force that opposes a movement of the steering member in the direction that allows the steering angle of the steering wheels to be increased, such as to decrease the steering angle measured.

In this way, it is possible to correct the manoeuvre carried out by the operator tending to take the vehicle back into conditions of sufficient lateral stability, if the user does not act on the steering wheel.

Advantageously, the control unit can be configured to calculate, based on the value measured by the measuring sensor, a second alert value of the steering angle, greater than the alert value of the steering angle, and to generate on the steering member, when the steering angle measured exceeds the second alert value, a second haptic signal perceptible by the user.

Thanks to this solution it is possible to again warn the user of the vehicle if he/she continues to increase the steering angle after the alert value has been passed, minimising the probability that the user has not noticed the first haptic alert signal.

According to a further aspect of the invention, the second haptic signal can be a vibration.

In this way, the operator is informed that a possible condition of lateral instability of the vehicle has been reached in an effective manner and without generating a hindrance to the driving of the vehicle.

According to a further aspect of the invention, the second haptic signal can be an increase, with respect to when the steering angle detected is less than the second alert value, in the resistance that opposes a movement of the steering member in the direction that allows the steering angle of the steering wheels to be increased.

In this way, also in the presence of rough terrain that could generate vibrations that could be mistaken for a vibrating haptic signal of the steering member, it is possible to effectively warn the operator that a possible condition of lateral instability of the vehicle has been reached.

Another aspect of the invention provides that the steering member can comprise a steering wheel integrally rotating with a shaft rotatably associated with the main frame and the steering system comprises an electric motor having a rotor connected to said shaft; said electric motor being actuated by the control unit to generate the haptic signal.

In this way, it is not necessary to install additional devices on the vehicle that make the haptic signal, thus providing a compact, rational and cost-effective solution.

Moreover, such an electric motor can be actuated by the control unit to generate the further haptic signal.

Furthermore, said electric motor can be actuated by the control unit to generate the second haptic signal.

A further aspect of the invention provides that the measuring sensor can be an inertial platform.

In this way, it is possible to use precise information on the forces acting on the vehicle to calculate the alert value.

The invention also provides a method for controlling a self-propelled vehicle equipped with:
- a main frame
- two steering wheels articulated to the main frame,
- a lifting unit connected to the main frame and adapted to lift a load L
- a steering system adapted to control the steering wheels and equipped with a steering member,
which comprises the steps of:
- detecting, through a detection sensor, the value of the steering angle of the steering wheels, comparing an alert value of the steering angle with the value of the steering angle detected by the detection sensor,
- generating on the steering member, through the control unit, a haptic signal perceptible by a user of the vehicle when the value of the steering angle detected by the detection sensor exceeds the alert value, said method comprises the steps of:
- measuring, through a measuring sensor, the value of a parameter of the vehicle that influences the stability of the vehicle itself, said measuring sensor being one from:
- an inertial platform, adapted to calculate the accelerations acting on the vehicle and the inclination of the terrain on which the vehicle moves,
- an accelerometer configured to measure the accelerations of the vehicle along a plane perpendicular to a longitudinal axis of the vehicle itself,
- a speedometer of the vehicle,
- a sensor adapted to measure the weight of the load L,
- a sensor apparatus adapted to determine the relative position of the load (L) with respect to the main frame,
- calculating, based on the value measured by the measuring sensor, the alert value of the steering angle.

### BRIEF DESCRIPTION OF THE DRAWINGS

Further characteristics and advantages of the invention will become clear from reading the following description provided as an example and not for limiting purposes, with the help of the figures illustrated in the attached tables.

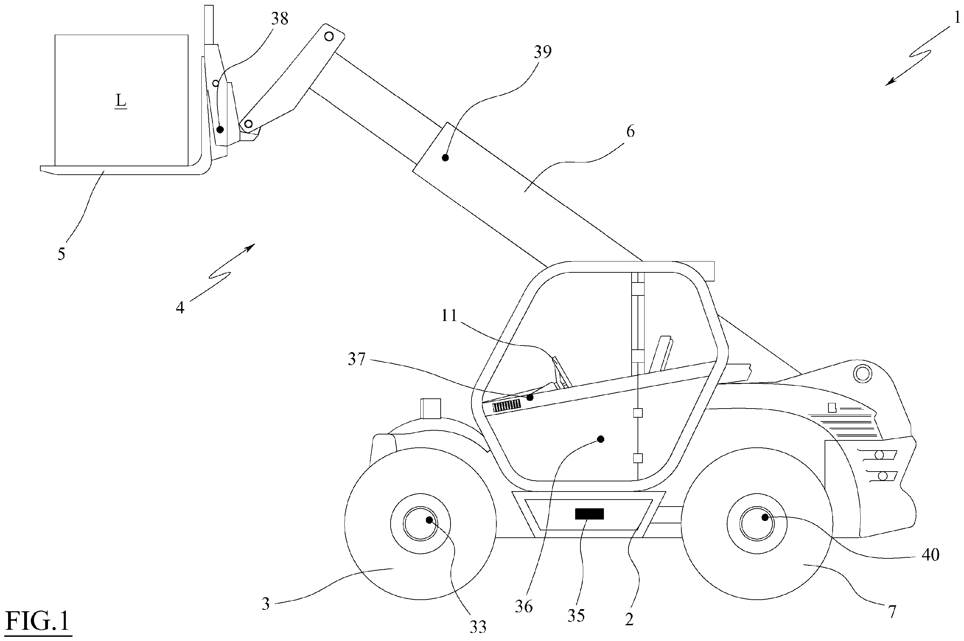

Figure 1 is a side view of a vehicle according to the invention.
Figure 2 is a diagram of a steering member of the vehicle of figure 1.

### BEST EMBODIMENT OF THE INVENTION

With particular reference to such figures, reference numeral 1 globally indicates a self-propelled vehicle comprising a main frame 2 to which a pair of steering wheels 3, for example front, are articulated and a lifting unit 4 equipped with a gripping member 5 for lifting a load L.

In the embodiment illustrated in the figures, the vehicle 1 is a self-propelled telescopic lifter equipped with a telescopic arm 6, which at one end is articulated to the bearing frame, for example with respect to one or two rotation axes, and at the opposite end supports the gripping member 5.

The gripping member 5 is for example formed from a pair of forks and/or one or more lifting hooks.

The vehicle 1 comprises a steering system 10 to control the steering of the steering wheels 3, which is equipped with a steering member, for example a steering wheel 11 (i.e. a disc-shaped body able to be gripped by a user) integrally rotating with a shaft rotatably associated with the main frame 2.

The shaft consists, for example, of a steering column 12.

The vehicle 1 comprises an actuator device connected to the steering member, i.e. to the steering wheel.

In the illustrated embodiment, the actuator device comprises an electric motor 13 having a stator 14 and a rotor 15, wherein the rotor 15 is coupled with said stator 14 and integrally rotates with the shaft, i.e. with the steering column 12.

Such an electric motor 13 is adapted to generate a resistant torque that opposes the movement of the steering member, i.e. the steering wheel 11, with respect to a neutral position.

In the embodiment illustrated in the figures, the steering system 10 comprises a tubular casing 16 connected to the main frame 2, in which the steering column 12 is rotatably associated.

In such an embodiment, the steering column 12 is made up of a first segment 17, integral with the steering wheel 11 and rotatably associated with the tubular casing 16, and a second segment 18, rotatably associated with the tubular casing 16 and able to be associated in rotation with the first segment 17 through a clutch 19 arranged between the two segments.

The clutch 19 is for example an electro-magnetic clutch equipped with a first portion 20 integrally rotating with the first segment 17, a second portion 21 integral with the second segment 18 and a spring 22 adapted to couple the first and second portion when the electrical power supply to the clutch 19 is lacking.

The steering system 10 comprises a torsion sensor 23, adapted to detect the torque exerted on the steering wheel 11 by the operator.

The steering system 10 also comprises an angular sensor 24, adapted to detect the rotation of the second segment 18 of the steering column 12.

The steering device 10 comprises the actuator device, i.e. the electric motor 13.

The electric motor 13 is housed in the tubular casing 16 and has the stator 14 fixed to said tubular casing 16 and the rotor 15 integral with the first segment 17 of the steering column 12.

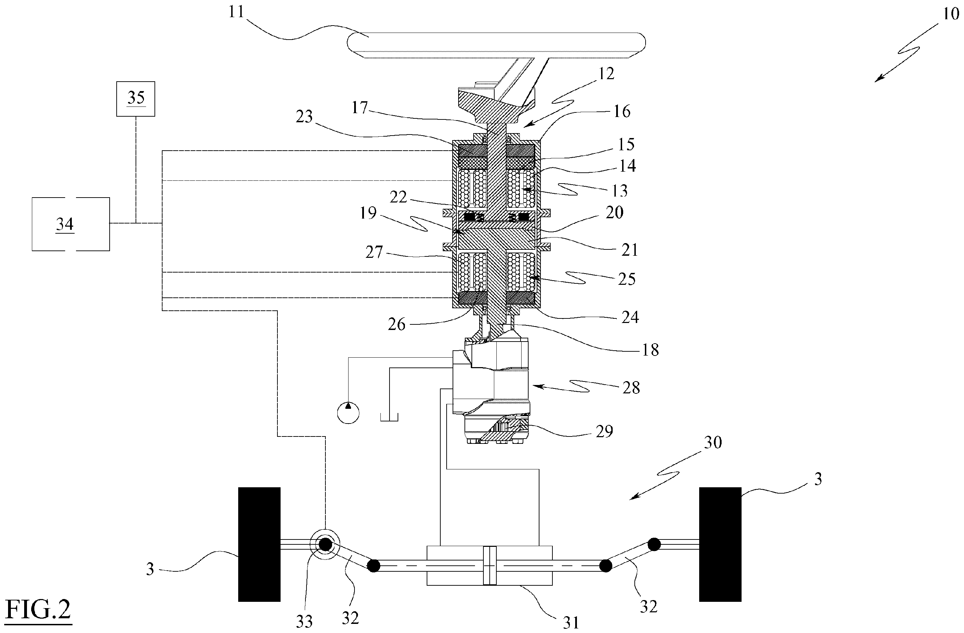

As illustrated in figure 2, the steering system 10 comprises a further electric motor 25 housed in the tubular casing 16 and equipped with a stator 26 fixed to the tubular casing 16 and a rotor 27 integrally rotating with the second segment 18 of the steering column 12.

The particular steering system illustrated makes a steer by wire system that, thanks to the two electric motors and to the clutch, makes it possible to vary the ratio between the rotation angle of the steering wheel and the rotation angle of the second segment of the steering column, as well as making it possible to carry out steering also in emergency conditions, i.e. in the case of a lack of power supply to the motors.

The steering system 10 comprises a power steering unit 28 connected to the steering member, for example connected to the steering column 12, preferably equipped with a gerotor 29.

In particular, the power steering unit 28 is fixed to the tubular casing 16 and is connected to the second segment 18 of the steering column 12.

The power steering unit 28 is fed through an oil-hydraulic pump actuated by an endothermal motor equipped on the vehicle and is in communication with a tank of the pumping liquid.

The steering system 10 is equipped with a steering axle 30 that comprises a rigid supporting cross member (not shown), at the opposite ends of which two hubs, adapted to support the steering wheels 3, are rotatably associated with respect to a horizontal axis.

Each hub is hinged to the end of the supporting cross member through a respective articulation adapted to rotate the hubs with respect to a substantially vertical steering axis.

The steering system 10 comprises a hydraulic cylinder 31 (one or more depending on requirements) actuated through the power steering unit 28.

The hydraulic cylinder 31 is connected to a steering lever mechanism 32 to actuate the steering wheels 3, i.e. the hubs, oscillating with respect to their steering axis.

Preferably, the vehicle 1 also comprises a further pair of steering wheels 7, for example rear, articulated to the main frame 2 and controlled by the steering system 10.

The further pair of steering wheels 7 is articulated to the main frame 2 through a steering axle (not illustrated), for example analogous to that which supports the steering wheels 3, equipped with a hydraulic cylinder (not illustrated) fed by the power steering unit 28.

The vehicle 1 comprises a detection sensor 33 adapted to detect the steering angle of the steering wheels 3 with respect to a predetermined angular reference position, the latter for example able to be set at the position in which the steering wheels 3 are straight, i.e. they allow the vehicle 1 to proceed along a straight line.

Moreover, the vehicle 1 comprises a control unit 34 communicating with the detection sensor 33 and with a measuring sensor adapted to measure the value of a parameter of the vehicle 1 that influences the stability of the vehicle 1.

Such a measuring sensor is for example an inertial platform 35, adapted to calculate the accelerations acting on the vehicle 1 and the inclination of the terrain on which the vehicle 1 moves.

Other embodiments can provide for the measuring sensor to be one from:
- an accelerometer 36 configured to measure the accelerations of the vehicle 1 along a plane perpendicular to a longitudinal axis of the vehicle itself,
- a speedometer 37 of the vehicle 1,
- a sensor 38 adapted to measure the weight of the load L,
- a sensor apparatus 39 adapted to determine the relative position of the load L with respect to the main frame 2.

The sensor apparatus 39 comprises one or more of the following sensors:
- a sensor adapted to measure the length of the telescopic arm 6, for example a linear encoder,
- a sensor adapted to measure the inclination of the telescopic arm 6 with respect to a horizontal plane,
- a sensor adapted to measure the inclination of the telescopic arm 6 with respect to a vertical reference plane.

The control unit 34 is configured to calculate an alert value of the steering angle of the steering wheels 3 based on the value measured by the measuring sensor, and actuate the actuator device, when the value of the steering angle detected by the detection sensor 33 exceeds the alert value, so that said actuator device generates on the steering member 11 a haptic signal perceptible by a user of the vehicle 1.

For example, the haptic signal provides for a vibration of the steering member generated by the actuator device.

Alternatively or in addition, the haptic signal provides for an increase, with respect to when the steering angle detected is less than the alert value, in the resistance generated by the actuator device in opposition to a movement of the steering member in the direction that makes it possible to increase the steering angle of the steering wheels 3.

In other words the haptic signal is an increase in the resistant torque generated by the actuator device on the steering member in response to a torque generated on the steering member by the user of the vehicle to increase the steering angle.

For example, the control unit 34 is configured to continuously generate the haptic signal, i.e. to continuously actuate the actuator device so that it generates the haptic signal, so that the detected value of the steering angle is not less than the alert value.

Alternatively, the control unit 34 can be configured to generate the haptic signal periodically, i.e. to periodically actuate the actuator device so that it generates the haptic signal, in order that the detected value of the steering angle is not less than the alert value.

The control unit 34 is also configured to calculate, based on the value measured by the measuring sensor, a maximum value of the steering angle, greater than the alert value, and to generate on the steering member, when the value of the steering angle detected by the detection sensor 33 exceeds the maximum value, a further haptic signal, perceptible by the user of the vehicle.

For example, the alert value is equal to 0.9 and 0.7 times the maximum steering value.

For example, the further haptic signal provides for a vibration of the steering member generated by the actuator device.

Alternatively or in addition, the further haptic signal provides for an increase, with respect to when the steering angle detected is less than the maximum value, in the resistance generated by the actuator device in opposition to a movement of the steering member in the direction that allows the steering angle of the steering wheels 3 to be increased.

In other words, in this case the further haptic signal is an increase in the resistant torque generated by the actuator device on the steering member in response to a torque generated on the steering member by the user of the vehicle to increase the steering angle.

For example, the further haptic signal is an active force generated by the actuator device in the opposite direction with respect to the direction that allows the increase in the steering angle, such as to decrease the steering angle detected if the user of the vehicle 1 does not act on the steering member in opposition to such an active force.

In practice, the active force is such as to orient the steering member towards a neutral position if the user of the vehicle 1 does not act on the steering member in opposition to such an active force.

Alternatively or in addition, the increase in resistance when the steering angle detected exceeds the maximum value can be such as to prevent a further increase in the steering angle, i.e. such as to prevent a further exceeding of the maximum steering value.

For example, the control unit 34 is configured to continuously generate the further haptic signal, i.e. to actuate the actuator device so that it generates the further haptic signal, in order that the detected value of the steering angle is not less than the maximum value.

In an alternative embodiment, the control unit 34 is configured to actuate the actuator device so as to progressively increase the resistance generated by the actuator device in opposition to a movement of the steering member in the direction that allows the steering angle to be increased, going from a detected value of the steering angle equal to the alert value to a detected value of the steering angle equal to the maximum value.

The control unit 34 is also configured to calculate, based on the value measured by the measuring sensor, a second alert value of the steering angle, greater than the alert value of the steering angle, and to actuate the actuator device, when the steering angle detected by the detection sensor 33 exceeds the second alert value, so as to generate on the steering member a haptic signal perceptible by the user.

The second alert value is less than the maximum value, for example it is equal to 0.95 and 0.8 times the maximum steering value.

The second alert value is greater than the alert value, for example it is equal to 1.1 and 1.2 times the alert value.

In practice, the second alert value is greater than the alert value and less than the maximum value.

For example, the second haptic signal provides for a vibration of the steering member generated by the actuator device.

The vibration corresponding to the second haptic signal has greater intensity with respect to the intensity of the vibration corresponding to the haptic signal.

Alternatively or in addition, the second haptic signal provides for an increase, with respect to when the steering angle detected is less than the second alert value, in the resistance generated by the actuator device in opposition to a movement of the steering member in the direction that allows the steering angle of the steering wheels 3 to be increased.

In other words, in this case the second haptic signal is an increase in the resistant torque generated by the actuator device on the steering member in response to a torque generated on the steering member by the user of the vehicle to increase the steering angle.

For example, the control unit 34 is configured to continuously generate the second haptic signal, i.e. to actuate the actuator device so that it generates the second haptic signal, in order that the detected value of the steering angle is not less than the second alert value.

The vehicle 1 comprises a further detection sensor 40 adapted to detect the steering angle of the further steering wheels 7 with respect to a predetermined angular reference position, the latter for example being able to be set at the position in which the further steering wheels 7 are straight, i.e. they allow the vehicle 1 to proceed along a straight line.

In such an embodiment, the control unit 34 is in communication with the further detection sensor 40 and is configured to actuate the actuator device of the steering member with the same logic described previously for just the detection sensor 33.

An embodiment provides for the control unit 34 to be in communication with a plurality of measurement sensors and to be configured to calculate at least one from the alert value, the second alert value and the maximum value based on the combination of the values measured by said measurement sensors.

Such a plurality of sensors comprises one or more from:
- the accelerometer 36 configured to measure the accelerations of the vehicle 1 along the plane perpendicular to the longitudinal axis of the vehicle itself
- the speedometer 37 of the vehicle 1,
- the sensor 38 adapted to measure the weight of the load L
- the sensor apparatus 39 adapted to determine the relative position of the load L with respect to the main frame 2.

The sensor apparatus 39 comprises one or more from the following sensors:
- the sensor adapted to measure the length of the telescopic arm, for example a linear encoder,
- the sensor adapted to measure the inclination of the telescopic arm with respect to a horizontal plane,
- the sensor adapted to measure the inclination of the telescopic arm with respect to a vertical reference plane.

The operation of the vehicle 1 according to the invention is as follows.

When the vehicle 1 is in motion, the control unit 34 constantly detects the steering angle and compares it with the measured value of the parameter (or of the parameters) indicative of the stability of the vehicle.

When, while steering, the measured value exceeds the calculated alert value, the control unit 34 actuates the electric motor 13 of the steering system 10 so that it generates the haptic signal on the steering wheel, for example the vibration or the increase in the resistance in opposition to a movement of the steering wheel 11 in the direction that allows the steering angle of the steering wheels 3 to be increased.

If the operator acts on the steering wheel 11 to further increase the steering angle beyond the alert value, if the detected value of said angle exceeds the second alert value, the control unit 34 actuates the electric motor 13 of the steering system 10 in order that it generates the further haptic signal on the steering wheel, for example the vibration or the increase in the resistance in opposition to a movement of the steering wheel 11 in the direction that allows the steering angle of the steering wheels 3 to be increased.

If, despite the signals, the operator acts on the steering wheel 11 to increase the steering angle beyond the second alert value and the detected value of the steering angle exceeds the maximum value, the control unit 34 actuates the electric motor 13 of the steering system 10 for example generating an increase in resistance in opposition to a movement of the steering wheel 11 in the direction that allows the steering angle of the steering wheels 3 to be increased, such that the steering angle cannot be increased.

The invention thus conceived can undergo numerous modifications within the scope of protection as defined by the claims.

## Claims

1. Self-propelled vehicle (1) comprising:
- a main frame (2),
- two steering wheels (3) articulated to the main frame (2),
- a lifting unit (4) connected to the main frame (2) and adapted to lift a load (L),
- a steering system (10) adapted to control the steering wheels (3) and equipped with a steering member (11), and
- a control unit (34) communicating with a detection sensor (33) for detecting a steering angle of the steering wheels (3) and configured for generating on the steering member (11) a haptic signal perceptible by a user of the vehicle (1),
said self-propelled vehicle being **characterized by** the fact that the control unit (34) communicates with a measuring sensor adapted to measure the value of a parameter of the vehicle (1) that influences the stability of the vehicle itself, said measuring sensor being one from:
- an inertial platform (35), adapted to calculate the accelerations acting on the vehicle (1) and the inclination of the terrain on which the vehicle (1) moves,
- an accelerometer (36) configured to measure the accelerations of the vehicle (1) along a plane perpendicular to a longitudinal axis of the vehicle itself,
- a speedometer (37) of the vehicle (1),
- a sensor (38) adapted to measure the weight of the load L,
- a sensor apparatus (39) adapted to determine the relative position of the load (L) with respect to the main frame (2),
said control unit (34) being configured to:
- calculate an alert value of the steering angle of the steering wheels (3) based on the value measured by the measuring sensor, and
- generating the haptic signal on the steering member (11), when the value of the steering angle detected by the detection sensor (33) exceeds the alert value.

2. Vehicle (1) according to claim 1, wherein the haptic signal is a vibration.

3. Vehicle (1) according to claim 1, wherein the haptic signal is an increase, with respect to when the steering angle detected is less than the alert value, in the resistance that opposes a movement of the steering member (11) in the direction that allows the steering angle of the steering wheels (3) to be increased.

4. Vehicle (1) according to claim 1, wherein the control unit (34) is configured to calculate based on the value measured by the measuring sensor (35,36,37,38,39) a maximum value of the steering angle, greater than the alert value, and to generate on the steering member (11), when the value of the steering angle detected reaches the maximum value, a further haptic signal perceptible by the user of the vehicle (1).

5. Vehicle (1) according to claim 4, wherein the further haptic signal is an active force that opposes a movement of the steering member (11) in the direction that allows the steering angle of the steering wheels (3) to be increased, such as to orient the steering member in the direction of decreasing the steering angle detected.

6. Vehicle (1) according to claim 1, wherein the control unit (34) is configured to calculate based on the value measured by the measuring sensor (35,36,37,38,39), a second alert value of the steering angle, greater than the alert value of the steering angle, and to generate on the steering member (11), when the steering angle measured exceeds the second alert value, a second haptic signal perceptible by the user.

7. Vehicle (1) according to claim 6, wherein the second haptic signal is a vibration.

8. Vehicle (1) according to claim 6, wherein the second haptic signal is an increase, with respect to when the steering angle detected is less than the second alert value, in the resistance that opposes a movement of the steering member (11) in the direction that allows the steering angle of the steering wheels (3) to increase.

9. Vehicle (1) according to claim 1, wherein the steering member comprises a steering wheel (11) integrally rotating with a shaft (12) rotatably associated with the main frame (2) and the steering system (10) comprises an electric motor (13) having a rotor (15) connected to said shaft (12); said electric motor (13) being actuated by the control unit (34) to generate the haptic signal.

10. Method for controlling a self-propelled vehicle (1) equipped with:
- a main frame (2)
- two steering wheels (3) articulated to the main frame (2),
- a lifting unit (4) connected to the main frame (2) and adapted to lift a load (L)
- a steering system (10) adapted to control the steering wheels (3) and equipped with a steering member (11),
that comprises the steps of:
- detecting, through a detection sensor (33), the value of the steering angle of the steering wheels (3),
- comparing an alert value of the steering angle with the value of the steering angle detected by the detection sensor (33),
- generating on the steering member (11), through the control unit (34), a haptic signal perceptible by a user of the vehicle (1) when the value of the steering angle detected by the detection sensor (33) exceeds the alert value,
said method being **characterized by** the fact that it comprises the steps of:
- measuring, through a measuring sensor, the value of a parameter of the vehicle (1) that influences the stability of the vehicle itself, said measuring sensor being one from:
∘ an inertial platform (35), adapted to calculate the accelerations acting on the vehicle (1) and the inclination of the terrain on which the vehicle (1) moves,
∘ an accelerometer (36) configured to measure the accelerations of the vehicle (1) along a plane perpendicular to a longitudinal axis of the vehicle itself,
∘ a speedometer (37) of the vehicle (1),
∘ a sensor (38) adapted to measure the weight of the load L,
∘ a sensor apparatus (39) adapted to determine the relative position of the load (L) with respect to the main frame (2),
- calculating, based on the value measured by the measuring sensor (35,36,37,38,39), the alert value of the steering angle.

## Patentansprüche

1. Selbstfahrendes Fahrzeug (1), umfassend:
- einen Hauptrahmen (2),
- zwei Lenkräder (3), die gelenkig mit dem Hauptrahmen (2) verbunden sind,
- eine Hubeinheit (4), die mit dem Hauptrahmen (2) verbunden und angepasst ist, um eine Last (L) anzuheben,
- ein Lenksystem (10), das angepasst ist, um die Lenkräder (3) zu steuern, und mit einem Lenkelement (11) ausgestattet ist, und
- eine Steuereinheit (34) in Kommunikation mit einem Erfassungssensor (33) zum Erfassen eines Lenkwinkels der Lenkräder (3) und die konfiguriert ist, um an dem Lenkelement (11) ein haptisches Signal zu erzeugen, das von einem Benutzer des Fahrzeugs (1) wahrnehmbar ist,
wobei das selbstfahrende Fahrzeug **dadurch gekennzeichnet ist, dass** die Steuereinheit (34) mit einem Messsensor kommuniziert, der angepasst ist, um den Wert eines Parameters des Fahrzeugs (1) zu messen, der die Stabilität des Fahrzeugs an sich beeinflusst, wobei der Messsensor einer von Folgenden ist:
- eine Trägheitsplattform (35), die angepasst ist, um die auf das Fahrzeug (1) wirkenden Beschleunigungen und die Neigung des Geländes, auf dem sich das Fahrzeug (1) bewegt, zu berechnen,
- einen Beschleunigungsmesser (36), der konfiguriert ist, um die Beschleunigungen des Fahrzeugs (1) entlang einer Ebene senkrecht zu einer Längsachse des Fahrzeugs an sich zu messen,
- einen Geschwindigkeitsmesser (37) des Fahrzeugs (1),
- einen Sensor (38), der angepasst ist, um das Gewicht der Last L zu messen,
- eine Sensorvorrichtung (39), die angepasst ist, um die relative Position der Last (L) in Bezug auf den Hauptrahmen (2) zu bestimmen,
wobei die Steuereinheit (34) zu Folgendem konfiguriert ist:
- Berechnen eines Alarmwerts des Lenkwinkels der Lenkräder (3) basierend auf dem Wert, der von dem Messsensor gemessen wird, und
- Erzeugen des haptischen Signals an dem Lenkelement (11), wenn der vom Erfassungssensor (33) erfasste Wert des Lenkwinkels den Alarmwert überschreitet.

2. Fahrzeug (1) nach Anspruch 1, wobei das haptische Signal eine Vibration ist.

3. Fahrzeug (1) nach Anspruch 1, wobei das haptische Signal eine Zunahme im Vergleich dazu, wenn der erfasste Lenkwinkel kleiner als der Alarmwert ist, des Widerstands ist, der einer Bewegung des Lenkelements (11) in die Richtung entgegenwirkt, die eine Vergrößerung des Lenkwinkels der Lenkräder (3) ermöglicht.

4. Fahrzeug (1) nach Anspruch 1, wobei die Steuereinheit (34) konfiguriert ist, um basierend auf dem vom Messsensor (35, 36, 37, 38, 39) gemessenen Wert einen Maximalwert des Lenkwinkels zu berechnen, der größer ist als der Alarmwert, und um an dem Lenkelement (11) ein weiteres haptisches Signal zu erzeugen, das von dem Benutzer des Fahrzeugs (1) wahrnehmbar ist, wenn der erfasste Wert des Lenkwinkels den Maximalwert erreicht.

5. Fahrzeug (1) nach Anspruch 4, wobei das weitere haptische Signal eine aktive Kraft ist, die einer Bewegung des Lenkelements (11) in die Richtung entgegenwirkt, die eine Vergrößerung des Lenkwinkels der Lenkräder (3) ermöglicht, um das Lenkelement in die Richtung der Verringerung des erfassten Lenkwinkels auszurichten.

6. Fahrzeug (1) nach Anspruch 1, wobei die Steuereinheit (34) konfiguriert ist, um basierend auf dem vom Messsensor (35, 36, 37, 38, 39) gemessenen Wert einen zweiten Alarmwert des Lenkwinkels zu berechnen, der größer ist als der Alarmwert des Lenkwinkels, und um an dem Lenkelement (11) ein zweites haptisches Signal zu erzeugen, das von dem Benutzer wahrnehmbar ist, wenn der gemessene Lenkwinkel den zweiten Alarmwert überschreitet.

7. Fahrzeug (1) nach Anspruch 6, wobei das zweite haptische Signal eine Vibration ist.

8. Fahrzeug (1) nach Anspruch 6, wobei das zweite haptische Signal eine Zunahme im Vergleich dazu, wenn der erfasste Lenkwinkel kleiner als der zweite Alarmwert ist, des Widerstands ist, der einer Bewegung des Lenkelements (11) in die Richtung entgegenwirkt, die eine Vergrößerung des Lenkwinkels der Lenkräder (3) ermöglicht.

9. Fahrzeug (1) nach Anspruch 1, wobei das Lenkelement ein Lenkrad (11) umfasst, das integral mit einer Welle (12) dreht, die drehbar mit dem Hauptrahmen (2) verbunden ist, und das Lenksystem (10) einen Elektromotor (13) umfasst, der einen Rotor (15) aufweist, der mit der Welle (12) verbunden ist, wobei der Elektromotor (13) durch die Steuereinheit (34) betätigt wird, um das haptische Signal zu erzeugen.

10. Verfahren zum Steuern eines selbstfahrenden Fahrzeugs (1), das mit dem Folgenden ausgestattet ist:
- einem Hauptrahmen (2)
- zwei Lenkrädern (3), die gelenkig mit dem Hauptrahmen (2) verbunden sind,
- einer Hubeinheit (4), die mit dem Hauptrahmen (2) verbunden und angepasst ist, um eine Last (L) anzuheben,
- einem Lenksystem (10), das angepasst ist, um die Lenkräder (3) zu steuern, und das mit einem Lenkelement (11) ausgestattet ist,
das die folgenden Schritte umfasst:
- Erfassen, durch einen Erfassungssensor (33), des Werts des Lenkwinkels der Lenkräder (3),
- Vergleichen eines Alarmwerts des Lenkwinkels mit dem Wert des Lenkwinkels, der von dem Erfassungssensor (33) erfasst wird,
- Erzeugen an dem Lenkelement (11) durch die Steuereinheit (34) eines haptischen Signals, das von einem Benutzer des Fahrzeugs (1) wahrnehmbar ist, wenn der Wert des von dem Erfassungssensor (33) erfassten Lenkwinkels den Alarmwert überschreitet,
wobei das Verfahren **dadurch gekennzeichnet ist, dass** es die folgenden Schritte umfasst:
- Messen, durch einen Messsensor, des Werts eines Parameters des Fahrzeugs (1), der die Stabilität des Fahrzeugs an sich beeinflusst, wobei der Messsensor einer von Folgenden ist:
o eine Trägheitsplattform (35), die angepasst ist, um die auf das Fahrzeug (1) wirkenden Beschleunigungen und die Neigung des Geländes, auf dem sich das Fahrzeug (1) bewegt, zu berechnen,
o ein Beschleunigungsmesser (36), der konfiguriert ist, um die Beschleunigungen des Fahrzeugs (1) entlang einer Ebene senkrecht zu einer Längsachse des Fahrzeugs an sich zu messen,
o ein Geschwindigkeitsmesser (37) des Fahrzeugs (1),
o ein Sensor (38), der angepasst ist, um das Gewicht der Last L zu messen,
o eine Sensorvorrichtung (39), die angepasst ist, um die relative Position der Last (L) in Bezug auf den Hauptrahmen (2) zu bestimmen,
- Berechnen des Alarmwerts des Lenkwinkels basierend auf dem Wert, der von dem Messsensor (35, 36, 37, 38, 39) gemessen wird.

## Revendications

1. Véhicule automoteur (1) comprenant :
- un châssis principal (2),
- deux roues de direction (3) articulés sur le châssis principal (2),
- une unité de levage (4) reliée au châssis principal (2) et adaptée pour soulever une charge (L),
- un système de direction (10) adapté pour contrôler les roues de direction (3) et équipé d'un élément de direction (11), et
- une unité de commande (34) en communication avec un capteur de détection (33) permettant de détecter un angle de braquage des roues de direction (3) et configurée pour générer sur l'élément de direction (11) un signal tactile perceptible par un utilisateur du véhicule (1),
ledit véhicule automoteur étant **caractérisé en ce que** l'unité de commande (34) communique avec un capteur de mesure adapté pour mesurer la valeur d'un paramètre du véhicule (1) qui influence la stabilité du véhicule lui-même, ledit capteur de mesure étant un provenant ;
- d'une plateforme inertielle (35), adaptée pour calculer les accélérations agissant sur le véhicule (1) et l'inclinaison du terrain sur lequel se déplace le véhicule (1),
- un accéléromètre (36) configuré pour mesurer les accélérations du véhicule (1) le long d'un plan perpendiculaire à l'axe longitudinal du véhicule lui-même,
- un indicateur de vitesse (37) du véhicule (1),
- un capteur (38) adapté pour mesurer le poids de la charge L,
- un appareil de détection (39) adapté pour déterminer la position relative de la charge (L) par rapport au châssis principal (2),
ladite unité de commande (34) étant configurée pour :
- calculer une valeur d'alerte de l'angle de braquage des roues de direction (3) sur la base de la valeur mesurée par le capteur de mesure, et
- générer le signal tactile sur l'élément de direction (11), lorsque la valeur de l'angle de braquage détectée par le capteur de détection (33) dépasse la valeur d'alerte.

2. Véhicule (1) selon la revendication 1, dans lequel le signal tactile est une vibration.

3. Véhicule (1) selon la revendication 1, dans lequel le signal tactile est une augmentation, par rapport au moment où l'angle de braquage détecté est inférieur à la valeur d'alerte, de la résistance qui s'oppose à un mouvement de l'élément de direction (11) dans la direction qui permet d'augmenter l'angle de braquage des roues de direction (3).

4. Véhicule (1) selon la revendication 1, dans lequel l'unité de commande (34) est configurée pour calculer, sur la base de la valeur mesurée par le capteur de mesure (35,36,37,38,39), une valeur maximale de l'angle de braquage, supérieure à la valeur d'alerte, et pour générer sur l'élément de direction (11), lorsque la valeur de l'angle de braquage détectée atteint la valeur maximale, un autre signal tactile perceptible par l'utilisateur du véhicule (1).

5. Véhicule (1) selon la revendication 4, dans lequel le signal tactile supplémentaire est une force active qui s'oppose à un mouvement de l'élément de direction (11) dans la direction qui permet d'augmenter l'angle de braquage des roues de direction (3), de manière à orienter l'élément de direction dans le sens de la diminution de l'angle de braquage détecté.

6. Véhicule (1) selon la revendication 1, dans lequel l'unité de commande (34) est configurée pour calculer, sur la base de la valeur mesurée par le capteur de mesure (35,36,37,38,39), une deuxième valeur d'alerte de l'angle de braquage, supérieure à la valeur d'alerte de l'angle de braquage, et pour générer sur l'élément de direction (11), lorsque l'angle de braquage mesuré est supérieur à la deuxième valeur d'alerte, un deuxième signal tactile perceptible par l'utilisateur du véhicule (1).

7. Véhicule (1) selon la revendication 6, dans lequel le deuxième signal tactile est une vibration.

8. Véhicule (1) selon la revendication 6, dans lequel le deuxième signal tactile est une augmentation, par rapport au moment où l'angle de braquage détecté est inférieur à la deuxième valeur d'alerte, de la résistance qui s'oppose à un mouvement de l'élément de direction (11) dans la direction qui permet d'augmenter l'angle de braquage des roues de direction (3).

9. Véhicule (1) selon la revendication 1, dans lequel l'élément de direction comprend une roue de direction (11) tournant intégralement avec un arbre (12) associé de manière rotative au châssis principal (2) et le système de direction (10) comprend un moteur électrique (13) ayant un rotor (15) relié audit arbre (12) ; ledit moteur électrique (13) étant actionné par l'unité de commande (34) afin de générer le signal tactile.

10. Procédé de commande d'un véhicule automoteur (1) équipé :
- d'un châssis principal (2)
- de deux roues de direction (3) articulés sur le châssis principal (2),
- d'une unité de levage (4) reliée au châssis principal (2) et adaptée pour soulever une charge (L)
- d'un système de direction (10) adapté pour contrôler les roues de direction (3) et équipé d'un élément de direction (11),
comprenant les étapes consistant à :
- détecter, au moyen d'un capteur de détection (33), la valeur de l'angle de braquage des roues de direction (3),
- comparer une valeur d'alerte de l'angle de braquage avec la valeur de l'angle de braquage détectée par le capteur de détection (33),
- générer sur l'élément de direction (11), au moyen de l'unité de commande (34), un signal tactile perceptible par un utilisateur du véhicule (1) lorsque la valeur de l'angle de braquage détectée par le capteur de détection (33) est supérieure à la valeur d'alerte,
ledit procédé étant **caractérisé en ce qu'**il comprend les étapes suivantes :
- mesurer, au moyen d'un capteur de mesure, la valeur d'un paramètre du véhicule (1) qui a une influence sur la stabilité du véhicule lui-même, ledit capteur de mesure étant un parmi :
o une plateforme inertielle (35), adaptée pour calculer les accélérations agissant sur le véhicule (1) et l'inclinaison du terrain sur lequel se déplace le véhicule (1),
o un accéléromètre (36) configuré pour mesurer les accélérations du véhicule (1) le long d'un plan perpendiculaire à l'axe longitudinal du véhicule lui-même,
∘ un indicateur de vitesse (37) du véhicule (1),
∘ un capteur (38) adapté pour mesurer le poids de la charge L,
∘ un appareil de détection (39) adapté pour déterminer la position relative de la charge (L) par rapport au châssis principal (2),
- calculer, sur la base de la valeur mesurée par le capteur de mesure (35,36,37,38,39), la valeur d'alerte de l'angle de braquage.
